# EUROPÄISCHE PATENTSCHRIFT

(11) **EP 2 411 240 B1**
(45) Veröffentlichungstag und Bekanntmachung des Hinweises auf die Patenterteilung: **08.01.2020**
(21) Anmeldenummer: 10709696.8
(22) Anmeldetag: 17.03.2010
(51) Int. Cl.: H02J 5/00, H02J 7/02, B60L 53/22

(54) **ANTRIEBSSYSTEM, VERFAHREN ZUM BETREIBEN EINES ANTRIEBSSYSTEMS UND VERWENDUNG**
ELECTRIC DRIVE SYSTEM, METHOD FOR OPERATING SUCH A SYSTEM AND ITS USE
SYSTEME D'ENTRAINEMENT ELECTRIQUE, SON PROCÉDÉ DE FONCTIONNEMENT

(30) Priorität: 27.03.2009 DE 102009014704
(43) Veröffentlichungstag der Anmeldung: 01.02.2012
(73) Patentinhaber: SEW-EURODRIVE GmbH & Co. KG, 76646 Bruchsal (DE)
(72) Erfinder: MAHLEIN, Jochen, 76139 Karlsruhe (DE); KOLLAR, Hans, Jürgen, 76646 Bruchsal (DE); LEWANDOWSKI, Marek, 71272 Renningen (DE); HAUCK, Matthias, 68723 Schwetzingen (DE); SCHMIDT, Josef, 76676 Graben-Neudorf (DE); PODBIELSKI, Leobald, 76199 Karlsruhe (DE)
(86) Internationale Anmeldenummer: PCT/EP2010/001661
(87) Internationale Veröffentlichungsnummer: WO 2010/108623

(56) Entgegenhaltungen:
- EP-A2- 0 834 977
- DD-A1- 114 729
- DE-A1- 4 107 391
- DE-A1-102006 022 223
- JP-A- H1 198 713

## Beschreibung

Die Erfindung betrifft ein Antriebssystem, ein Verfahren zum Betreiben eines Antriebssystems und eine Verwendung.

Es ist bekannt, Elektromotoren von einem Wechselrichter zu speisen, der aus einem Energiespeicher versorgt ist, wie beispielsweise Zwischenkreiskondensator eines Umrichters. Es liegt auch nahe, bei batterieversorgten Fahrzeugen mit elektromotorischem Antrieb, den Elektromotor aus einem Wechselrichter zu speisen, der von der Batterie versorgt ist.

Aus der EP 0 834 977 A2 ist bekannt, aus einem Versorgungsnetz einen Wechselstrom mittels eines Gleichrichters gleichzurichten und an den Sternpunkt eines umrichtergespeisten Elektromotors zu führen zur Beladung eines Energiespeichers, aus welchem der Umrichter versorgt wird.

Aus der DE 10 2006 02223 A1 ist ein Verfahren zur induktiven Energieübertragung bekannt, wobei eine Sekundärwicklung relativ zu einer langgestreckt ausgeführten Primärleitung verschoben wird,

Aus der DE 41 07 391 A1 ist ein Elektrofahrzeug mit einem batteriegespeisten Wechselrichter bekannt.

Aus der JP H11 98713 A ist als nächstliegender Stand der Technik ein Verfahren zur Ladekontrolle für einen Energiespeicher bekannt.

Aus der DD 114 729 A1 ist eine Schaltungsanordnung für ein spannungsgeregeltes Stromversorgungsgerät bekannt.

Der Erfindung liegt daher die Aufgabe zugrunde, eine kostengünstige Ladeschaltung für einen Energiespeicher vorzusehen.

Erfindungsgemäß wird die Aufgabe bei dem Antriebssystem nach den in Anspruch 1 und bei dem Verfahren zum Betreiben eines Antriebssystems nach den in Anspruch 6 angegebenen Merkmalen gelöst.

Wichtige Merkmale der Erfindung bei dem Antriebssystem sind, dass das Antriebssystem, einen Elektromotor, einen Wechselrichter und zumindest einen Energiespeicher umfasst,
wobei der Elektromotor von dem Wechselrichter speisbar ist, der aus dem Energiespeicher versorgbar ist,
wobei der Elektromotor als Drehstrommotor in Sternpunktschaltung ausgeführt ist,
wobei dem Sternpunkt des Elektromotors Strom aus einem Gleichrichter zuführbar ist, der von einer Sekundärwicklung gespeist wird,
wobei die Sekundärwicklung aus einer Primärwicklung versorgbar ist, die induktiv an die Sekundärwicklung gekoppelt vorgesehen ist.

Von Vorteil ist dabei, dass eine sehr kompakte Ladeschaltung verwirklichbar ist, wobei sogar an der Sekundärwicklung ein weit geringeres Spannungsniveau bestehen darf als die zum Laden des Energiespeichers notwendige Spannung. Denn dadurch, dass die Statorwicklung über den Wechselrichter mit dem Energiespeicher verbunden ist und somit als Induktivität für die Ladeschaltung, beispielsweise nach Art eines Buck-Converters, verwendbar ist, ist sogar ein Hochsetzen des Spannungsniveaus von der Sekundärspannung auf die notwendige Ladespannung ermöglicht. Mit anderen Worten gesagt, ist also eine Weitspannungsversorgte Ladeschaltung ermöglicht.

Wenn die Sekundärspannung genügend groß ist, also über einem ersten kritischen Wert liegt, ist ein direktes Beladen der Energiespeicher aus der Sekundärwicklung ermöglicht.

Wenn die Sekundärspannung zu groß ist, also über einem zweiten kritischen Wert liegt, ab welchem der Energiespeicher mit einer gewissen Wahrscheinlichkeit gefährdet ist, ist ein Ableiten des Stromes über den Wechselrichter ermöglicht, also ein Wegleiten des Stromes vom Energiespeicher. Somit ist eine Verschlechterung, frühzeitige Alterung oder sonstige Gefährdung, wie Überhitzung des Energiespeichers vermeidbar.

Wenn die Sekundärspannung größer als ein dritter kritischer Wert ist, ist zusätzlich ein weiterer Strompfad freigebbar, der ohne aktive Ansteuerung ausführbar ist, über den dann der Strom mit hoher Sicherheit ableitbar ist, um den Energiespeicher sicher zu schützen, insbesondere mit einer höheren Sicherheitskategorie.

Wenn die Sekundärspannung also unterhalb des ersten kritischen Wertes liegt, ist von Vorteil, dass die Statorwicklungen auch zumindest teilweise die Funktion eines zusätzlichen Energiespeichers aufweisen und darüber hinaus auch zur Glättung des Ladestroms beitragen.

Es ist also eine Weitspannung verwendbar. Somit ist auch bei einer Verschlechterung der Kopplung oder bei einem primärseitigen Versorgungsnetz mit schwankender oder variabler Spannung ein Beladen ermöglicht. Es ist sogar Weitspannungsbetrieb ermöglicht, also das Beladen bei unterschiedlichen Versorgungsnetzen, die nicht nur in ihrer Frequenz sondern auch Effektivspannung unterschiedlich sind.

Bei der Ausgestaltung wird die Primärwicklung aus einem Spannungs-Strom-Wandler, insbesondere Gyrator, versorgt, der von einem Wechselrichter mit einer Wechselspannung gespeist wird,
wobei der Spannungs-Strom-Wandler zumindest eine Kapazität und eine Induktivität derart umfasst, dass die zugehörige Resonanzfrequenz im Wesentlichen der Frequenz der Wechselspannung entspricht, insbesondere wobei Kapazität und Induktivität in Reihe geschaltet sind. Von Vorteil ist dabei, dass das spannungsquellenartige Verhalten des die Primärwicklung speisenden einphasigen Wechselrichters in eine stromquellenartiges Verhalten umgewandelt wird, wodurch ein im Wesentlicher konstanter Strom zur Verfügung stellbar ist. Auf diese Weise ist auch bei schwacher induktiver Kopplung ein hoher Wirkungsgrad bei der berührungslosen Energieübertragung an die Sekundärspule erreichbar.

Bei der Ausgestaltung wird bei Überschreiten eines ersten kritischen Wertes der Spannung am Sternpunkt der Ladestrom mittels einer Diode direkt vom Gleichrichter zum oder zu den Energiespeichern ausgeführt, insbesondere wobei der erste kritische Wert der Ladespannung für den oder die Energiespeicher entspricht. Von Vorteil ist dabei, dass keine weiteren Verluste auftreten sondern die volle berührungslos übertragene Energie zum Aufladen des Energiespeichers zur Verfügung steht.

Bei der Ausgestaltung wird bei Unterschreiten des ersten kritischen Wertes der Spannung am Sternpunkt der Ladestrom über mindestens eine Statorwicklung und den Wechselrichter vom Gleichrichter zum oder zu den Energiespeichern geführt wird, insbesondere wobei der der Wechselrichter zusammen mit den Statorwicklungen als Hochsetzsteller betreibbar ist. Von Vorteil ist dabei, dass die niedrige Spannung an der Sekundärspule hochsetzbar ist und somit ein Aufladen trotz dieser geringen Spannung ermöglicht ist.

Bei der Ausgestaltung wird bei Überschreiten eines zweiten kritischen Wertes, der größer als der erste kritische Wert ist, wird ein Schalter geschlossen, über den Strom vom Sternpunkt zum unteren Potential abgeleitet wird. Von Vorteil ist dabei, dass ein Schutz der Energiespeicher vor Überladung vorsehbar ist.

Bei einer vorteilhaften Ausgestaltung ist einer der oder die Energiespeicher ein Kondensator, ein Ultracap-Kondensator oder eine Batterie. Von Vorteil ist dabei, dass je nach Bedarf eine Kapazität wählbar ist, die den Betrieb der geplanten Anwendung gewährleistet.

Bei der Ausgestaltung sind die Statorwicklungen des Elektromotors in Sternpunktschaltung verschaltet. Von Vorteil ist dabei, dass alle Statorwicklungen in einfacher Weise als Induktivitäten der Ladeschaltung verwendbar sind. Somit ist bei Verwendung des mit den Statorwicklungen verbundenen Wechselrichters als Hochsetzsteller eine Verteilung des Ladestroms auf die Statorwicklungen ermöglicht. Die ohmschen Verlustwärmeleistungen sind somit reduzierbar.

Bei einer vorteilhaften Ausgestaltung ist zwischen dem Sternpunkt und dem Gleichrichter eine zusätzliche Induktivität vorgesehen. Von Vorteil ist dabei, dass niedrigere Schaltfrequenzen des Wechselrichters verwendbar sind zur Erzeugung von in den einzelnen Statorwicklungen gleich großem Strom, wodurch dann auch die Schaltverluste der vom Wechselrichter umfassten Halbleiterschalter reduzierbar sind. Außerdem sind größere Spannungsunterschiede zwischen Ladespannung und Spannungsniveau der Energiequelle ermöglicht. Vorteilig ist weiter, dass eine Aufteilung des Stromes auf die Statorwicklungen erfolgt kann und somit geringere Verluste erreichbar sind.

Bei einer vorteilhaften Ausgestaltung ist der Effektivwert oder Spitzenwert der den Gleichrichter versorgenden Sekundärspannung kleiner als die Ladespannung für den Energiespeicher, insbesondere also kleiner ist als die zum Laden des Energiespeichers notwendige Spannung, insbesondere Eingangsspannung des Wechselrichters. Von Vorteil ist dabei, dass eine Weitspannungsenergiequelle verwendbar ist als den Schalter versorgende Energiequelle.

Wichtige Merkmale bei dem Verfahren zum Betreiben eines Antriebssystems sind, dass dem Sternpunkt des Elektromotors Strom aus einem Gleichrichter zugeführt wird, der von einer Sekundärwicklung gespeist wird,
wobei die Sekundärwicklung aus einer Primärwicklung berührungslos versorgt wird,
wobei Ladestrom für den Energiespeicher aus einem Wechselrichter gebildet wird, über den die Statorwicklungen des Elektromotors speisbar sind, insbesondere mit einem Drehspannungssystem, das im motorischen Betrieb bei Speisung des Wechselrichters aus dem Energiespeicher erzeugt wird,
solange die am Sternpunkt auftretende Spannung unterhalb eines ersten kritischen Wertes ist.

Von Vorteil ist dabei, dass zum Laden der Energiequelle ein Ladeverfahren verwendbar ist, das die Statorwicklungen des sowieso vorhandenen Elektromotors verwendet. Somit ist nicht nur eine Weitspannung als Sekundärspannung und somit als Energiequelle für die Ladeschaltung verwendbar sondern auch eine sehr kompakte Ausführung, da die Statorwicklungen des Motors verwendet werden zum Betreiben eines Ladeschaltung.

Bei der Ausgestaltung wird der Ladestrom dem Energiespeicher direkt aus dem Gleichrichter zugeführt wird, solange die am Sternpunkt auftretende Spannung oberhalb des ersten kritischen Wertes ist. Von Vorteil ist dabei, dass keine weiteren Verluste auftreten.

Bei der Ausgestaltung wird zumindest einer der unteren Schalter des Wechselrichters in den leitenden Zustand versetzt, wodurch Strom aus dem Gleichrichter über die zugehörige Statorwicklung an das untere Potential des Energiespeichers abgeführt wird, insbesondere also der Energiespeicher vor Strom aus dem Gleichrichter geschützt wird, solange die am Sternpunkt auftretende Spannung oberhalb eines zweiten kritischen Wertes liegt, der größer ist als der erste kritische Wert und ab dessen Überschreiten der Energiespeicher mit einer gewissen Wahrscheinlichkeit gefährdet ist. Von Vorteil ist dabei, dass eine hohe Sicherheit erreichbar ist.

Bei einer vorteilhaften Ausgestaltung wird ein weiterer Strompfad freigegeben, über welchen Strom aus dem Gleichrichter direkt oder über die zugehörige Statorwicklung an das untere Potential des Energiespeichers abgeführt wird, insbesondere also der Energiespeicher vor Strom aus dem Gleichrichter geschützt wird, solange die am Sternpunkt auftretende Spannung oberhalb eines dritten kritischen Wertes liegt, der größer ist als der zweite kritische Wert und ab dessen Überschreiten der Energiespeicher mit größerer Wahrscheinlichkeit gefährdet ist.
insbesondere wobei der weitere Strompfad aus einer passiven Schaltungsanordnung gebildet ist, insbesondere wobei der weitere Strompfad einen Thyristor umfasst, in dessen Ansteuerpfad eine Zenerdiode oder ein entsprechendes Bauelement, das ein schaltschwellenartiges Verhalten aufweist, vorgesehen ist. Von Vorteil ist dabei, dass eine sehr hohe Sicherheit erreichbar ist, da der Stromableitungspfad zweifach ausführbar ist.

Bei der Ausgestaltung sind die Statorwicklungen mit einem Drehspannungssystem speisbar, das aus dem Energiespeicher erzeugbar ist. Von Vorteil ist dabei, dass ein konventioneller Wechselrichter verwendbar ist, der aus drei Halbbrücken von jeweils einer Reihenschaltung von zwei Halbleiterschaltern besteht und somit eine pulsweitenmodulierte Ansteuerung zur Erzielung des motorischen oder generatorischen Betriebs der Halbleiterschalter erreichbar ist.

Bei einer vorteilhaften Ausgestaltung wird der Wechselrichter pulsweitenmoduliert oder blockkommutiert angesteuert, insbesondere zum motorischen oder generatorischen Betrieb des Elektromotors. Von Vorteil ist dabei, dass einfache Verfahren anwendbar sind.

Bei einer vorteilhaften Ausgestaltung werden die Schalter des Wechselrichters pulsweitenmoduliert angesteuert. Von Vorteil ist dabei, dass eine einfache und wenig aufwendige Betriebsweise realisierbar ist, insbesondere ist auch eine Regelung der Ladespannung auf einen Sollwert hin ermöglicht, indem als Stellgröße das Pulsweitenmodulationsverhältnis verwendbar ist.

Bei einer vorteilhaften Ausgestaltung ist der Wechselrichter mehrphasig ausgeführt und die Ansteuersignale für die Schalter des Wechselrichters synchron, zweitversetzt synchron oder asynchron ausgeführt werden. Von Vorteil ist dabei, dass bei synchroner Betriebsweise eine besonders einfache Ansteuerung ausführbar ist, bei asynchroner Betriebsweise eines gleichmäßige und unabhängige Auslastung der Halbbrücken des Wechselrichters sowie der Statorwicklungen ausführbar ist und bei synchroner Betriebsweise mit Zeitversatz eine gleichförmige Auslastung der Halbbrücken und der Statorwicklungen in einfacher Weise ermöglicht ist.

Bei einer vorteilhaften Ausgestaltung wird das Nachladen des Energiespeichers zyklisch wiederholt, insbesondere das Nachladen abwechselnd mit dem motorischen oder generatorischen Betrieb des Elektromotors ausgeführt wird. Von Vorteil ist dabei, dass die Statorwicklungen nur auf das Maximum des in den Betriebsweisen auftretenden Stroms ermöglicht ist. Alternativ ist auch ein gleichzeitiges Erzeugen von Ladestrom bei motorischer und generatorischer Betriebsweise des Elektromotors ermöglicht, wobei allerdings die Statorwicklungen entsprechend stärker dimensioniert werden müssen.

Weitere Vorteile ergeben sich aus den Unteransprüchen.

Die Erfindung wird nun anhand von Abbildungen näher erläutert:

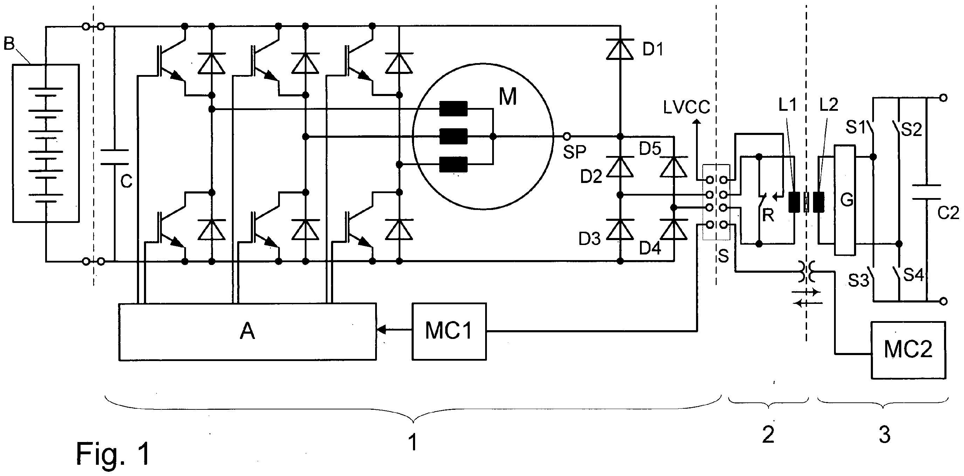

In der Figur 1 ist eine erfindungsgemäße Vorrichtung mit einem schematischen Schaltplan gezeigt.

Hierbei ist aus den parallel geschalteten Energiespeichern B und C, die vorzugsweise als Batterie und/oder Kondensator ausgeführt sind, ein Wechselrichter zur Speisung des Elektromotors M vorgesehen. Die Statorwicklungen des Elektromotors M sind als Drehstromwicklung in Sternpunktschaltung ausgeführt. Somit ist der Elektromotor mit einer vom Wechselrichter bestimmbaren Speisefrequenz, also einem mit dieser Speisefrequenz drehenden Drehspannungssystem versorgbar und auf diese Weise die Drehzahl des Elektromotors steuerbar oder alternativ bei Anbringen eines Drehwinkel- oder Drehzahlsensors regelbar auf eine gewünschte Drehzahl oder ein gewünschtes Drehmoment hin.

Im generatorischen Betrieb ist die vom Elektromotor M erzeugte Energie über den Wechselrichter dem Energiespeicher zuführbar.

Der Wechselrichter besteht aus drei Halbbrücken, also Zweigpaaren, die jeweils eine Reihenschaltung von einem oberen und unteren ansteuerbaren Halbleiterschalter umfassen, denen wiederum jeweils eine Diode parallel zugeschaltet ist. Die Halbleiterschalter werden vorzugsweise pulsweitenmoduliert angesteuert. Die Ansteuerelektronik A erzeugt die Ansteuersignale für die Halbleiterschalter. Im motorischen Betrieb wird also dem Motor M ein Drehspannungssystem mit vorgebbarer Frequenz zugeführt und somit der Motor M in Drehbewegung versetzt.

Umgekehrt ist im generatorischen Betrieb Energie vom Motor über den Wechselrichter an die Energiespeicher B und C zuführbar und somit sind diese beladbar.

Das Beladen ist jedoch auch bei nicht drehendem Motor M ausführbar. Wenn also beispielsweise das Fahrzeug in Parkposition ist, ist hierzu von außen eine Primärwicklung L2 in induktive Kopplung mit einer Sekundärwicklung L1 bringbar. Diese Sekundärwicklung L1 ist Teil einer Ladeeinheit 2, die steckverbunden ist mit der übrigen Motor-Umrichter-Einheit 1. Die Primärwicklung wird gespeist von einem Gyrator G, der wiederum von einem einphasigen Wechselrichter, welcher die Schalter S1, S2, S3, S4 umfasst und welcher gespeist wird von der am Kondensator C2 anliegenden Gleichspannung. Dabei wandelt der Gyrator G das spannungsquellenartige Verhalten der Ausgangsseite des einphasigen Wechselrichters um in ein stromquellenartiges Verhalten zur Sekundärwicklung L1 hin.

Zum Abschalten der zugeführten Energie ist ein Kurzschließer R parallel zur Sekundärwicklung vorgesehen. Ist dieser Kurzschließer R geöffnet, wird der Sekundär-Wechselstrom de Gleichrichter, umfassend die Dioden D2, D3, D4, D5 zugeführt und der gleichgerichtete Strom über die Diode D1 den Energiespeichern B und C zugeführt.

Im Fall einer Überspannung oder auch zum sonstigen Schutz der Energiespeicher B und C, beispielsweise als Schutz vor Überladung, wird der Wechselrichter verwendet zum Beenden der Beladung, indem ein oder mehrere untere Schalter des Wechselrichters, also auf unterem Potential der Energiespeicher angeordnete Schalter in den leitenden Zustand versetzt werden, wodurch der gleichgerichtete Wechselstrom über den Sternpunkt (SP) des Motors M und die eine oder die mehreren Statorwicklungen des Motors M und den oder die unteren Schalter abgeleitet wird.

Sind alle Schalter des Wechselrichters geöffnet, wird ein Teil des gleichgerichteten Wechselstroms über den Sternpunkt (SP) und die Statorwicklungen des Motors M den Dioden des Wechselrichters zugeführt, die den Wechselstrom gleich richten und daraus einen unipolaren Strom zur Beladung der Energiespeicher B und C zur Verfügung stellen. Dabei reduzieren die Statorwicklungen hochfrequente Anteile und tragen zur Glättung bei.

Ein Aufladen der Energiespeicher ist auch dann ermöglicht, wenn die am Sternpunkt anliegende Spannung SP kleiner ist als die benötigte Ladespannung. Dann nämlich ist mittels der Induktivitäten der Statorwicklung ein Hochsetzstellerbetrieb ermöglicht. Hierzu wird der Motor mit Wechselrichter nicht nur zur bloßen Gleichrichtung verwendet sondern als Hochsetzsteller betrieben. Für diesen Zweck werden die Schalter entsprechend angesteuert, so dass am Energiespeicher eine weit höhere Spannung erzeugbar ist als der vom Gleichrichter erzeugbare Spitzenspannungswert der unipolaren Spannung. Hierbei bewirken die Induktivitäten der Statorwicklungen bei Schaltvorgängen der Halbleiterschalter des Wechselrichters zusammen und machen die Höhe der Spannung am Energiespeicher steuerbar oder bei Anbringen eines Mittels zur Erfassung der Spannung am Energiespeicher regelbar. Wichtiger Parameter ist hierbei die Schaltfrequenz der Schalter des Wechselrichters. Trotz einer Netzspannung, deren Spitzenwert und/oder Effektivwert kleiner ist als die für den Energiespeicher notwendige Ladespannung, ist also ein Aufladen des Energiespeichers ermöglicht.

Im motorischen und/oder generatorischen Betrieb des Motors wird der Wechselrichter derart angesteuert, dass eine Drehspannung am Motor anliegt. Dabei sind also die Ansteuersignale abhängig voneinander, so dass die Drehspannung an den Statorwicklungen anliegt. Bei dem beschriebenen Ladebetrieb und nicht antreibendem oder angetriebenem Motor M dürfen die Ansteuersignale für die Schalter der Halbbrücken unabhängig voneinander erzeugt werden.

Die Ansteuerung der drei Halbbrücken, also Zweigpaare, des Wechselrichters ist dabei synchron ausführbar. Bei einer asynchronen Ausführung der Ansteuersignalen, ist eine weiter verbesserte gleichmäßigere Auslastung der Schalter ermöglicht. Asynchron bedeutet hierbei, dass die den jeweiligen Halbbrücken zugeordneten Ansteuersignalen eine verschiedene Frequenz aufweisen und somit nicht synchron zueinander sind.

Mittels des unipolaren Stroms, welcher beim Beladen der Energiespeichers und Hochsetzstellerbetrieb erzeugt wird, wird ein Haltemoment erzeugt im Elektromotor, insbesondere bei Ausführung als Synchronmotor.

Mittels des Schließens der unteren Schalter des Wechselrichters ist die Batterie vor Überladung oder Überspannung schützbar.

In einem weiteren erfindungsgemäßen Ausführungsbeispiel ist ein weiterer elektronischer Schalter vorgesehen, der zwischen dem Sternpunkt und dem unteren Potential oder alternativ zwischen einem der Motoranschlüsse und dem unteren Potential vorgesehen ist, also parallel zu einem der unteren Schalter angeordnet ist. Auf diese Weise ist die Sicherheit weiter erhöhbar. Insbesondere ist bei Ausführung dieses weiteren Schalters als Thyristor eine passive Schaltung, beispielsweise umfassend eine Zener-Diode oder dergleichen, ausführbar, mit der ein Ableiten des Stromes aus dem Sternpunkt ins untere Potential der Energiespeicher B und C ab Überschreiten einer kritischen Spannung ermöglicht ist, die größer ist als diejenige kritische Spannung, bei deren Überschreiten die unteren Schalter des Wechselrichters geschlossen werden.

In einem weiteren erfindungsgemäßen Ausführungsbeispiel werden die Schalter des Wechselrichters statt pulsweitenmoduliert blockkommutiert angesteuert von der in Figur 1 nicht gezeigten Ansteuerung.

In einem weiteren erfindungsgemäßen Ausführungsbeispiel ist sogar bei motorischem Betrieb des Motors M dem Energiespeicher in der beschriebenen Weise zuführbar, so dass die Kapazität des Energiespeichers langsamer aufgebraucht wird, also der obengenannte Ladestrom zur zumindest teilweisen Speisung des Wechselrichters verwendbar ist. Allerdings müssen hierzu die Statorwicklungen und die Dioden des Gleichrichters entsprechend robust dimensioniert werden.

In einem weiteren erfindungsgemäßen Ausführungsbeispiel sind mehrere Wechselrichter aus dem Energiespeicher versorgt, die jeweils einen Elektromotor speisen, wobei über eine Statorwicklung eines ersten oder mehrerer Elektromotoren der Energiespeicher in der oben geschilderten Weise mit jeweils einem Schalter zur gesteuerten Zufuhr von Strom an die jeweilige Statorwicklung.

Bei weiteren erfindungsgemäßen Ausführungsbeispielen ist eine zusätzliche Induktivität L zwischen Sternpunkt (SP) und dem Gleichrichter (D2, D3, D4, D5) eingefügt, deren Strom von einem steuerbaren Schalter beeinflussbar ist. Dabei arbeitet der Schalter im Wesentlichen einem Buck-Converter entsprechend, wobei allerdings als Induktivität zumindest die Statorwicklungen und die Induktivität L am Sternpunkt der Statorwicklungen vorgesehen ist und als Last der Wechselrichter mit Energiespeicher wirksam ist.

Dem Schalter, vorzugsweise einem Halbeleiterschalter, ist eine Diode parallel zugeschaltet, wobei diese Parallelschaltung über die in Reihe geschalteten Diode mit dem unteren Potential der unipolaren Spannung verbunden ist.

Auf diese Weise ist es nun ermöglicht, mittels des Schalters einen Wechselstrom dem Sternpunkt zuzuführen, so dass über die Dioden des Wechselrichters 1 dem Energiespeicher ein Ladestrom zuführbar ist. Somit ist ein Aufladen des Energiespeichers ermöglicht.

Bei der Erfindung wirken die Statorwicklungen auf den über den Schalter zugeführten Strom glättend und stellen auch einen zusätzlichen Energiespeicher dar.

### Bezugszeichenliste

1 Umrichter-Motor-Einheit
2 Ladeeinheit, Sekundärteil
3 Ladeeinheit, Primärteil
D1 Diode
D2 Diode
D3 Diode
D4 Diode
D5 Diode
S1 Schalter
S2 Schalter
S3 Schalter
S4 Schalter
C2 Kondensator
B Energiespeicher, beispielsweise Batterie
C Energiespeicher, beispielsweise Kondensator
S Steckverbindung
M Elektromotor in Sternpunktschaltung
R Relais
G Gyrator
L1 Sekundärinduktivität
L2 Primärinduktivität
MC1 erster Mikrocontroller
MC2 zweiter Mikrocontroller
A Ansteuerelektronik

## Patentansprüche

1. Antriebssystem, umfassend Elektromotor (M), Wechselrichter, Energiespeicher (B, C),
wobei der Wechselrichter aus drei Halbbrücken von jeweils einer Reihenschaltung von zwei Halbleiterschaltern besteht,
wobei der Elektromotor von dem Wechselrichter speisbar ist, der aus dem Energiespeicher (B, C) versorgbar ist,
wobei der Elektromotor (M) als Drehstrommotor in Sternpunktschaltung ausgeführt ist,
wobei die Statorwicklungen des Elektromotors in Sternpunktschaltung verschaltet sind,
**wobei** dem Sternpunkt (SP) des Elektromotors (M) Strom aus einem Gleichrichter (D2, D3, D4, D5) zuführbar ist, der von einer Sekundärwicklung (L1) gespeist wird,
**wobei** die Sekundärwicklung (L1) aus einer Primärwicklung (L2) versorgbar ist, die induktiv an die Sekundärwicklung (L1) gekoppelt vorgesehen ist,
bei Überschreiten eines ersten kritischen Wertes der Spannung am Sternpunkt (SP) der Ladestrom mittels einer Diode (D1) direkt vom Gleichrichter (D2, D3, D4, D5) zum oder zu den Energiespeichern (B, C) ausgeführt wird,
wobei der erste kritische Wert der Ladespannung für den oder die Energiespeicher (B, C) entspricht,
wobei die Primärwicklung (L2) aus einem Spannungs-Strom-Wandler, insbesondere Gyrator, versorgt wird, der von einem Wechselrichter mit einer Wechselspannung gespeist wird,
wobei der Spannungs-Strom-Wandler zumindest eine Kapazität und eine Induktivität derart umfasst, dass die zugehörige Resonanzfrequenz im Wesentlichen der Frequenz der Wechselspannung entspricht, insbesondere wobei Kapazität und Induktivität in Reihe geschaltet sind,
wobei bei Unterschreiten des ersten kritischen Wertes der Spannung am Sternpunkt (SP) der Ladestrom über mindestens eine Statorwicklung und den Wechselrichter vom Gleichrichter (D2, D3, D4, D5) zum oder zu den Energiespeichern (B, C) geführt wird, wobei der der Wechselrichter zusammen mit den Statorwicklungen als Hochsetzsteller betreibbar ist,
wobei bei Überschreiten eines zweiten kritischen Wertes, der größer als der erste kritische Wert ist, wird ein Schalter geschlossen, über den Strom vom Sternpunkt (SP) zum unteren Potential abgeleitet wird, insbesondere zum Schutz der Energiespeicher (B, C) vor Überladung.

2. Antriebssystem nach Anspruch 1,
**dadurch gekennzeichnet, dass**
zumindest ein Energiespeicher (B, C) als Kondensator, Ultracap-Kondensator und/oder Batterie ausgeführt ist.

3. Antriebssystem nach mindestens einem der vorangegangenen Ansprüche,
**dadurch gekennzeichnet, dass**
zwischen dem Sternpunkt (SP) und dem diesen speisenden Gleichrichter (D2, D3, D4, D5) eine zusätzliche Induktivität vorgesehen ist.

4. Antriebssystem nach mindestens einem der vorangegangenen Ansprüche,
**dadurch gekennzeichnet, dass**
der Wechselrichter mit einer Statorwicklung oder den Statorwicklungen, insbesondere zusammen mit der zusätzlichen Induktivität, einen Hochsetzsteller bildet, insbesondere dem Strom aus dem Gleichrichter (D2, D3, D4, D5) zugeführt wird und der den Energiespeichern (B, C) Ladestrom zur Verfügung stellt.

5. Antriebssystem nach mindestens einem der vorangegangenen Ansprüche,
**dadurch gekennzeichnet, dass**
der Effektivwert oder Spitzenwert der den Gleichrichter (D2, D3, D4, D5) versorgenden, an der Sekundärwicklung (L1) auftretenden Spannung kleiner ist als die Ladespannung für den Energiespeicher (B, C), insbesondere also kleiner ist als die zum Laden des Energiespeichers (B, C) notwendige Spannung, insbesondere Eingangsspannung des Wechselrichters.

6. Verfahren zum Betreiben eines Antriebssystems nach mindestens einem der vorangegangenen Ansprüche,
umfassend einen aus einem Energiespeicher (B, C) versorgbaren Elektromotor,
wobei der Elektromotor in Sternpunkschaltung betrieben wird, wobei dem Sternpunkt (SP) des Elektromotors Strom aus einem Gleichrichter (D2, D3, D4, D5) zugeführt wird, der von einer Sekundärwicklung (L1) gespeist wird,
wobei die Sekundärwicklung (L1) aus einer Primärwicklung (L2) berührungslos versorgt wird,
wobei Ladestrom für den Energiespeicher (B, C) aus einem Wechselrichter gebildet wird, über den die Statorwicklungen des Elektromotors speisbar sind, insbesondere mit einem Drehspannungssystem, das im motorischen Betrieb bei Speisung des Wechselrichters aus dem Energiespeicher (B, C) erzeugt wird,
solange die am Sternpunkt (SP) auftretende Spannung unterhalb eines ersten kritischen Wertes ist,
wobei der Ladestrom dem Energiespeicher (B, C) direkt aus dem Gleichrichter (D2, D3, D4, D5) über eine Diode (D1) zugeführt wird, solange die am Sternpunkt (SP) auftretende Spannung oberhalb des ersten kritischen Wertes ist,
wobei zumindest einer der unteren Schalter des Wechselrichters in den leitenden Zustand versetzt wird, wodurch Strom aus dem Gleichrichter (D2, D3, D4, D5) über die zugehörige Statorwicklung an das untere Potential des Energiespeichers (B, C) abgeführt wird, insbesondere also der Energiespeicher (B, C) vor Strom aus dem Gleichrichter (D2, D3, D4, D5) geschützt wird, solange die am Stempunkt (SP) auftretende Spannung oberhalb eines zweiten kritischen Wertes liegt, der größer ist als der erste kritische Wert und ab dessen Überschreiten der Energiespeicher (B, C) mit einer gewissen Wahrscheinlichkeit gefährdet ist.

7. Verfahren nach Anspruch 6,
**dadurch gekennzeichnet, dass**
ein weiterer Strompfad freigegeben wird, über welchen Strom aus dem Gleichrichter (D2, D3, D4, D5) direkt oder über die zugehörige Statorwicklung an das untere Potential des Energiespeichers (B, C) abgeführt wird, insbesondere also der Energiespeicher (B, C) vor Strom aus dem Gleichrichter (D2, D3, D4, D5) geschützt wird, solange die am Sternpunkt (SP) auftretende Spannung oberhalb eines dritten kritischen Wertes liegt, der größer ist als der zweite kritische Wert und ab dessen Überschreiten der Energiespeicher (B, C) mit größerer Wahrscheinlichkeit gefährdet ist.
insbesondere wobei der weitere Strompfad aus einer passiven Schaltungsanordnung gebildet ist, insbesondere wobei der weitere Strompfad einen Thyristor umfasst, in dessen Ansteuerpfad eine Zenerdiode oder ein entsprechendes Bauelement, das ein schaltschwellenartiges Verhalten aufweist, vorgesehen ist.

8. Verfahren nach Anspruch 6 oder 7,
**dadurch gekennzeichnet, dass**
der Wechselrichter pulsweitenmoduliert oder blockkommutiert angesteuert wird, insbesondere zum motorischen oder generatorischen Betrieb des Elektromotors,
und/oder dass
der Wechselrichter mehrphasig ausgeführt ist und beim Laden des Energiespeichers (B, C) die Ansteuersignale für die Schalter des Wechselrichters synchron, zweitversetzt synchron oder asynchron ausgeführt werden.

9. Verfahren nach Anspruch 6, 8 oder 7,
**dadurch gekennzeichnet, dass**
das Nachladen des Energiespeichers (B, C) zyklisch wiederholt wird, insbesondere das Nachladen abwechselnd mit dem motorischen oder generatorischen Betrieb des Elektromotors ausgeführt wird.

## Claims

1. Drive system, comprising an electric motor (M), an inverter and an energy store (B, C),
wherein the inverter consists of three half-bridges of in each case a series connection of two semiconductor switches, wherein the electric motor can be fed from the inverter, which can be supplied from the energy store (B, C),
wherein the electric motor (M) is configured as a three-phase motor in star connection,
wherein the stator windings of the electric motor are connected in star connection,
wherein the star point (SP) of the electric motor (M) can be supplied with current from a rectifier (D2, D3, D4, D5), which is fed from a secondary winding (L1),
wherein the secondary winding (L1) can be supplied from a primary winding (L2), which is inductively coupled to the secondary winding (L1),
if the voltage at the star point (SP) exceeds a first critical value, the charging current is configured directly from the rectifier (D2, D3, D4, D5) to the energy store (s) (B, C) by means of a diode (D1),
wherein the first critical value corresponds to the charging voltage for the energy store(s) (B, C),
wherein the primary winding (L2) is supplied from a voltage-current converter, in particular a gyrator, which is fed with an alternating voltage from an inverter,
wherein the voltage-current converter comprises at least one capacitance and one inductance such that the associated resonant frequency substantially corresponds to the frequency of the alternating voltage, in particular wherein the capacitance and the inductance are connected in series,
wherein, if the voltage at the star point (SP) falls short of the first critical value, the charging current is routed from the rectifier (D2, D3, D4, D5) to the energy store(s) (B, C) via at least one stator winding and the inverter, wherein the the inverter together with the stator windings can be operated as a boost converter,
wherein, if a second critical value, which is greater than the first critical value, is exceeded, a switch is closed, via which current is diverted from the star point (SP) to the lower potential, in particular in order to protect the energy stores (B, C) against overcharging.

2. Drive system according to claim 1,
**characterized in that**
at least one energy store (B, C) is configured as a capacitor, an ultracapacitor and/or a battery.

3. Drive system according to at least one of the preceding claims,
**characterized in that**
an additional inductance is provided between the star point (SP) and the rectifier (D2, D3, D4, D5) feeding said star point.

4. Drive system according to at least one of the preceding claims,
**characterized in that**
the inverter together with a stator winding or the stator windings, in particular together with the additional inductance, forms a boost converter, in particular which is supplied with current from the rectifier (D2, D3, D4, D5) and which provides charging current to the energy stores (B, C).

5. Drive system according to at least one of the preceding claims,
**characterized in that**
the effective value or peak value of the voltage supplying the rectifier (D2, D3, D4, D5) and occurring at the secondary winding (L1) is lower than the charging voltage for the energy store (B, C), that is to say in particular is lower than the voltage required for charging the energy store (B, C), in particular the input voltage of the inverter.

6. Method for operating a drive system according to at least one of the preceding claims,
comprising an electric motor which can be supplied from an energy store (B, C),
wherein the electric motor is operated in star connection, wherein current is supplied to the star point (SP) of the electric motor from a rectifier (D2, D3, D4, D5), which is fed from a secondary winding (L1),
wherein the secondary winding (L1) is supplied from a primary winding (L2) in a contactless manner,
wherein charging current for the energy store (B, C) is formed from an inverter, via which the stator windings of the electric motor can be fed, in particular by way of a three-phase voltage system which is produced in motor mode when the inverter is being fed from the energy store (B, C), for as long as the voltage occurring at the star point (SP) is below a first critical value,
wherein the charging current is fed to the energy store (B, C) directly from the rectifier (D2, D3, D4, D5) via a diode (Dl) for as long as the voltage occurring at the star point (SP) is above the first critical value,
wherein at least one of the lower switches of the inverter is set to the conducting state, as a result of which current is routed from the rectifier (D2, D3, D4, D5) to the lower potential of the energy store (B, C) via the associated stator winding, that is to say in particular the energy store (B, C) is protected against current from the rectifier (D2, D3, D4, D5), for as long as the voltage occurring at the star point (SP) is above a second critical value, which is greater than the first critical value and above which the energy store (B, C) is jeopardized with a certain probability.

7. Method according to claim 6,
**characterized in that**
a further current path is enabled, via which current is routed from the rectifier (D2, D3, D4, D5) to the lower potential of the energy store (B, C) directly or via the associated stator winding, that is to say in particular the energy store (B, C) is protected against current from the rectifier (D2, D3, D4, D5), for as long as the voltage occurring at the star point (SP) is above a third critical value, which is greater than the second critical value and above which the energy store (B, C) is jeopardized with a greater probability,
in particular wherein the further current path is formed of a passive circuit arrangement, in particular wherein the further current path comprises a thyristor, in the actuation path of which there is provided a Zener diode or a corresponding component which has a switching threshold-like behaviour.

8. Method according to claim 6 or 7,
**characterized in that**
the inverter is actuated in a pulse-width-modulated or block-commutated manner, in particular for operating the electric motor in motor or generator mode,
and/or **in that**
the inverter is configured as a multi-phase inverter and, when the energy store (B, C) is being charged, the actuation signals for the switches of the inverter are carried out synchronously, synchronously with a time offset, or asynchronously.

9. Method according to claim 6, 8 or 7,
**characterized in that**
the recharging of the energy store (B, C) is repeated cyclically, in particular the recharging is carried out in a manner alternating with operation of the electric motor in motor or generator mode.

## Revendications

1. Système d'entraînement comprenant un moteur électrique (M), un onduleur, un accumulateur d'énergie (B, C),
dans lequel l'onduleur est constitué de trois demi-ponts formés chacun d'un montage en série de deux commutateurs à semi-conducteurs,
dans lequel le moteur électrique peut être alimenté par l'onduleur qui peut être alimenté à partir de l'accumulateur d'énergie (B, C),
dans lequel le moteur électrique (M) est réalisé sous la forme d'un moteur triphasé à montage en étoile,
dans lequel les enroulements statoriques du moteur électrique sont câblés en étoile, dans lequel un courant peut être amené au point neutre (SP) du moteur électrique (M) à partir d'un redresseur (D2, D3, D4, D5) qui est alimenté par un enroulement secondaire (L1),
dans lequel l'enroulement secondaire (L1) peut être alimenté à partir d'un enroulement primaire (L2) qui est couplé par induction à l'enroulement secondaire (L1),
lorsqu'une première valeur critique de la tension au point neutre (SP) est dépassée, le courant de charge est conduit par l'intermédiaire d'une diode (Dl) directement du redresseur (D2, D3, D4, D5) vers le ou les accumulateurs d'énergie (B, C),
dans lequel la première valeur critique correspond à la tension de charge pour le ou les accumulateurs d'énergie (B, C),
dans lequel l'enroulement primaire (L2) est alimenté à partir d'un convertisseur tension-courant, en particulier d'un gyrateur, qui est alimenté en tension alternative par un onduleur,
dans lequel le convertisseur tension-courant comprend au moins un condensateur et une inductance de telle sorte que la fréquence de résonance associée corresponde sensiblement à la fréquence de la tension alternative, le condensateur et l'inductance étant en particulier montés en série,
dans lequel, lorsque la tension au point neutre (SP) devient inférieure à la première valeur critique de la tension, le courant de charge est conduit du redresseur (D2, D3, D4, D5) vers le ou les accumulateurs d'énergie (B, C) par l'intermédiaire d'au moins un enroulement statorique et de l'onduleur, l'onduleur pouvant fonctionner avec les enroulements statoriques comme transformateur élévateur,
dans lequel, lorsqu'une deuxième valeur critique qui est supérieure à la première valeur critique est dépassée, un commutateur, par lequel un courant est dérivé du point neutre (SP) vers le potentiel inférieur, est fermé, en particulier pour protéger les accumulateurs d'énergie (B, C) contre une surcharge.

2. Système d'entraînement selon la revendication 1,
**caractérisé en ce**
**qu'**au moins un accumulateur d'énergie (B, C) est réalisé sous la forme d'un condensateur, d'un supercondensateur et/ou d'une batterie.

3. Système d'entraînement selon au moins l'une des revendications précédentes,
**caractérisé en ce**
**qu'**une inductance supplémentaire est prévue entre le point neutre (SP) et le redresseur (D2, D3, D4, D5) qui alimente ce dernier.

4. Système d'entraînement selon au moins l'une des revendications précédentes,
**caractérisé en ce que**
l'onduleur forme avec un enroulement statorique ou les enroulements statoriques, en particulier avec l'inductance supplémentaire, un transformateur élévateur, en particulier auquel un courant est amené à partir du redresseur (D2, D3, D4, D5) et qui met un courant de charge à la disposition des accumulateurs d'énergie (B, C).

5. Système d'entraînement selon au moins l'une des revendications précédentes,
**caractérisé en ce que**
la valeur efficace ou la valeur de crête de la tension qui alimente le redresseur (D2, D3, D4, D5) et apparaît à l'enroulement secondaire (L1) est inférieure à la tension de charge pour l'accumulateur d'énergie (B, C), en particulier donc inférieure à la tension nécessaire pour charger l'accumulateur d'énergie (B, C), en particulier à la tension d'entrée de l'onduleur.

6. Procédé de fonctionnement d'un système d'entraînement selon au moins l'une des revendications précédentes,
comprenant un moteur électrique pouvant être alimenté à partir d'un accumulateur d'énergie (B, C),
dans lequel le moteur électrique fonctionne en montage en étoile,
dans lequel un courant est amené au point neutre (SP) du moteur électrique à partir d'un redresseur (D2, D3, D4, D5) qui est alimenté par un enroulement secondaire (L1),
dans lequel l'enroulement secondaire (L1) est alimenté sans contact à partir d'un enroulement primaire (L2),
dans lequel un courant de charge pour l'accumulateur d'énergie (B, C) est formé à partir d'un onduleur par l'intermédiaire duquel les enroulements statoriques du moteur électrique peuvent être alimentés, en particulier avec un système de tension triphasée qui est produit en fonctionnement en moteur lorsque l'onduleur est alimenté à partir de l'accumulateur d'énergie (B, C),
tant que la tension au point neutre (SP) est inférieure à une première valeur critique, dans lequel le courant de charge est amené à l'accumulateur d'énergie (B, C) directement à partir du redresseur (D2, D3, D4, D5) par l'intermédiaire d'une diode (Dl) tant que la tension au point neutre (SP) est supérieure à la première valeur critique,
dans lequel au moins l'un des commutateurs inférieurs de l'onduleur est mis dans l'état conducteur, de sorte qu'un courant provenant du redresseur (D2, D3, D4, D5) est dérivé par l'enroulement statorique associé vers le potentiel inférieur de l'accumulateur d'énergie (B, C), en particulier donc l'accumulateur d'énergie (B, C) est protégé contre le courant provenant du redresseur (D2, D3, D4, D5) tant que la tension au point neutre (SP) est supérieure à une deuxième valeur critique qui est supérieure à la première valeur critique et à partir du dépassement de laquelle l'accumulateur d'énergie (B, C) est menacé avec une certaine probabilité.

7. Procédé selon la revendication 6,
**caractérisé en ce qu'**un autre trajet de courant est libéré, par lequel un courant provenant du redresseur (D2, D3, D4, D5) est dérivé directement ou par l'intermédiaire de l'enroulement statorique associé vers le potentiel inférieur de l'accumulateur d'énergie (B, C), en particulier donc l'accumulateur d'énergie (B, C) est protégé contre le courant du redresseur (D2, D3, D4, D5) tant que la tension au point neutre (SP) est supérieure à une troisième valeur critique qui est supérieure à la deuxième valeur critique et à partir du dépassement de laquelle l'accumulateur d'énergie (B, C) est menacé avec une plus grande probabilité,
en particulier dans lequel l'autre trajet de courant est formé d'un circuit passif, en particulier dans lequel l'autre trajet de courant comprend un thyristor dans le trajet de commande duquel est prévue une diode Zener ou un composant correspondant qui présente un comportement du type à seuil de commutation.

8. Procédé selon la revendication 6 ou 7,
**caractérisé en ce que**
l'onduleur est commandé par modulation de largeur d'impulsion ou par commutation par blocs, en particulier pour le fonctionnement en moteur ou en générateur du moteur électrique,
et/ou que
l'onduleur est polyphasé et, lors de la charge de l'accumulateur d'énergie (B, C), les signaux de commande pour les commutateurs de l'onduleur sont synchrones, synchrones avec décalage dans le temps ou asynchrones.

9. Procédé selon la revendication 6, 8 ou 7,
**caractérisé en ce que**
la recharge de l'accumulateur d'énergie (B, C) est répétée cycliquement, en particulier la recharge est effectuée en alternance avec le fonctionnement en moteur ou en générateur du moteur électrique.
